# FASCICULE DE BREVET EUROPEEN

(11) **EP 0 857 336 B1**
(45) Date de publication et mention de la délivrance du brevet: **14.05.2003**
(21) Numéro de dépôt: 97935629.2
(22) Date de dépôt: 25.07.1997
(51) Int. Cl.: G06K 9/20

(54) **PROCEDE ET APPAREIL D'IDENTIFICATION DE CARACTERES FORMES SUR UNE PLURALITE DE PLAQUETTES DE SILICIUM**
VERFAHREN UND GERÄT ZUM IDENTIFIZIEREN VON ZEICHEN AUF MEHREREN SILIZIUMPLÄTTCHEN
METHOD AND APPARATUS FOR IDENTIFYING CHARACTERS ON A PLURALITY OF SILICON WAFERS

(30) Priorité: 29.07.1996 FR 9609698
(43) Date de publication de la demande: 12.08.1998
(73) Titulaire: RECIF SA, 31840 Aussonne (FR)
(72) Inventeur: POLI, Bernard, F-31480 Cox (FR); POLI, Alain, F-31840 Aussonne (FR)
(74) Mandataire: Morelle, Guy Georges Alain
(86) Numéro de dépôt international: FR9701394
(87) Numéro de publication internationale: WO98004997

(56) Documents cités:
- WO-A-95/11491
- US-A- 4 983 842

## Description

La présente invention se rapporte aux procédés et appareils d'identification de caractères formés sur une pluralité de plaquettes de silicium, les plaquettes étant disposées suivant des plans parallèles et alignées sur des moyens de support, consistant au moins à éclairer les caractères d'une plaquette, observer les caractères éclairés, identifier les caractères observés.

L'art antérieur enseigne notamment avec le document WO 91/10968 de tels procédé et dispositif. Plus particulièrement, ce document décrit notamment un appareil d'identification de marques gravées sur des plaquettes de silicium alignées dans un panier, appareil dans lequel un rayonnement lumineux est réfléchi sur un ou deux miroirs avant d'éclairer les marques d'une plaquette à identifier, et dans lequel l'image des marques ainsi éclairées est réfléchie sur deux miroirs avant de pénétrer dans une caméra d'observation. Afin d'éclairer les marques gravées sur une des plaquettes alignées dans le panier, l'appareil comporte des moyens pour soulever la plaquette placée directement devant la plaquette à identifier afin de permettre le placement d'un miroir en face des marques, le miroir étant positionné à 45° par rapport au plan défini par la plaquette.

Cet appareil présente l'inconvénient de nécessiter la manipulation d'une plaquette afin de permettre l'identification d'une autre plaquette ce qui peut engendrer un risque de contamination particulaire des plaquettes et des temps d'identification ralentis par ces manipulations. De plus, cet appareil utilise plusieurs miroirs pour observer les marques éclairées, entraînant ainsi une complexité accrue des mécanismes, et un coût de revient plus élevé de l'appareil, et pouvant provoquer des erreurs d'identification de plaquettes dues aux multiples réflexion de l'image sur les miroirs avant de pénétrer dans la caméra d'observation.

La présente invention propose notamment de pallier ces inconvénients. Plus précisément, elle consiste en un procédé d'identification de caractères formés sur une pluralité de plaquettes de silicium, lesdites plaquettes étant disposées suivant des plans parallèles et alignées sur des moyens de support, consistant au moins à éclairer les caractères d'une plaquette, observer lesdits caractères éclairés, identifier lesdits caractères observés, caractérisé en ce qu'il consiste à:
- insérer des moyens de réflexion lumineuse entre une première et une deuxième plaquettes successives de ladite pluralité de plaquettes, à partir du dessous de ladite pluralité de plaquettes,
- éclairer les caractères formés sur ladite première plaquette par l'intermédiaire d'un premier rayonnement lumineux incident réfléchi par lesdits moyens de réflexion lumineuse insérés entre ladite première et ladite deuxième plaquettes successives, de manière que ledit premier rayonnement lumineux incident, réfléchi par une partie de ladite première plaquette parallèle aux dits plans parallèles, soit dirigé selon une direction différente de la direction d'un axe optique d'observation,
- observer lesdits caractères éclairés de ladite première plaquette selon ledit axe optique, ledit axe optique étant rectiligne et disposé au moins en partie sous ladite pluralité de plaquettes.

Le procédé selon l'invention permet d'identifier les plaquettes sans les manipuler, avec des risques d'erreurs réduit au minimum par l'intermédiaire d'un axe optique direct entre des moyens d'observation, par exemple une caméra électronique, et les caractères à identifier sur une plaquette. De plus, le procédé selon l'invention permet par la configuration déterminée de l'éclairage évitant un éblouissement des moyens d'observation, l'utilisation et la position des moyens de réflexion lumineuse, d'identifier des caractères faiblement formés, par gravure ou en relief, à la surface des plaquettes de silicium.

Selon une caractéristique avantageuse, le procédé selon l'invention consiste à insérer lesdits moyens de réflexion lumineuse au dessus desdits caractères à identifier.

Selon une autre caractéristique avantageuse, le procédé selon l'invention consiste à disposer ledit axe optique, et lesdits moyens de réflexion lumineuse insérés entre ladite première et ladite deuxième plaquettes successives, de manière qu'un deuxième rayonnement lumineux incident soit réfléchi par lesdits moyens de réflexion lumineuse et par ladite partie de ladite première plaquette parallèle aux dits plans parallèles, selon la direction dudit axe optique.

Selon une autre caractéristique avantageuse, ledit deuxième rayonnement lumineux incident comprend au moins un premier faisceau dont un axe médian est parallèle aux dits plans suivant lesquels sont disposés lesdites plaquettes.

Selon une autre caractéristique avantageuse, ledit premier rayonnement lumineux incident comprend au moins un deuxième faisceau dont un axe médian est inclus dans un premier plan formant un angle supérieur à 0° et inférieur à 3°, et de préférence égal à 2°, avec lesdits plans parallèles.

Selon une autre caractéristique avantageuse, ledit premier rayonnement lumineux incident comprend au moins un troisième faisceau dont un axe médian est inclus dans un deuxième plan formant un angle supérieur à 0° et inférieur à 3°, et de préférence égal à 2°, avec ledit premier plan.

La présente invention a également pour objet un appareil permettant de mettre en oeuvre un procédé d'identification de caractères formés sur une pluralité de plaquettes de silicium, comprenant des moyens de support desdites plaquettes permettant une disposition desdites plaquettes suivant des plans parallèles et un alignement desdites plaquettes, des moyens d'éclairage desdits caractères, des moyens d'observation desdits caractères selon un axe optique, des moyens d'identification des caractères observés, caractérisé en ce qu'il comprend :
des moyens de réflexion lumineuse mobiles entre une première position dans laquelle lesdits moyens de réflexion lumineuse sont placés au dessous de ladite pluralité de plaquettes, et une deuxième position dans laquelle lesdits moyens de réflexion lumineuse sont insérés entre un premier et un deuxième plans parallèles successifs définissant une première et une deuxième plaquettes successives de ladite pluralité de plaquettes, des moyens de bras portant lesdits moyens de réflexion lumineuse, lesdits moyens de bras comportant un dégagement située au dessous desdits moyens de réflexion lumineuse, ledit dégagement étant positionné en partie entre lesdits premier et deuxième plans parallèles successifs lorsque lesdits moyens de réflexion lumineuse adoptent ladite deuxième position, de manière à permettre le passage dudit axe optique selon une direction rectiligne entre lesdits moyens d'observation desdits caractères et lesdits caractères observés, et en ce que lesdits moyens d'éclairage desdits caractères comprennent un premier rayonnement lumineux incident réfléchi par lesdits moyens de réflexion lumineuse de manière qu'un rayonnement lumineux réfléchi par une partie de plaquette parallèle aux dits plans parallèles, et dont les caractères sont éclairés, soit dirigé selon une direction différente de ladite direction dudit axe optique.

D'autres caractéristiques et avantages apparaîtront à la lecture qui suit d'un exemple de mode de réalisation d'un procédé et d'un appareil selon l'invention, accompagnée des dessins annexés, exemple donné à titre d'illustration et sans qu'aucune interprétation restrictive de l'invention ne puisse en être tirée.

La figure 1 représente une vue schématique latérale en coupe partielle d'un exemple de mode de réalisation d'un appareil selon l'invention.

La figure 2 représente un détail agrandi de l'exemple de la figure 1 lors d'une phase avantageuse de fonctionnement de l'appareil selon l'invention.

La figure 3 représente le détail de la figure 2 lors d'une autre phase de fonctionnement de l'appareil selon l'invention.

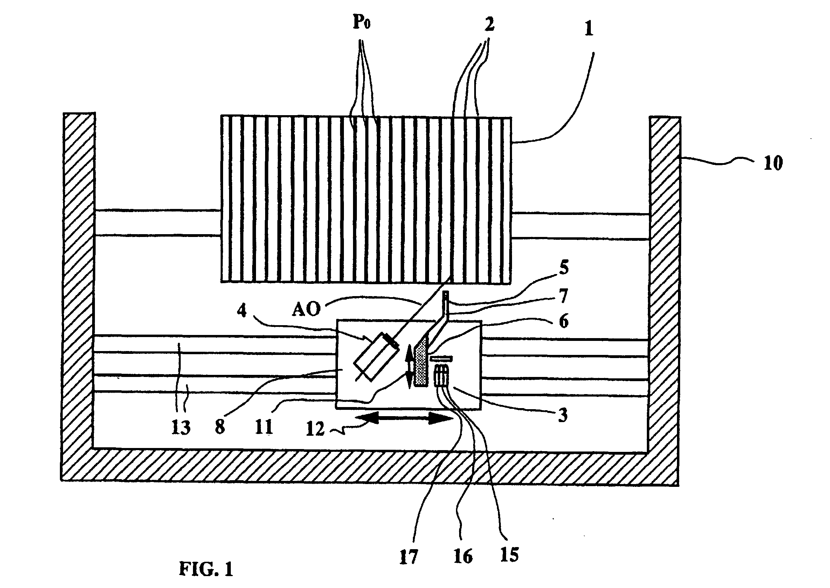

L'appareil représenté sur la figure 1 comprend des moyens de support 1 de plaquettes de silicium 2 standard en forme de disque, permettant une disposition des plaquettes suivant des plans parallèles P₀ et un alignement des plaquettes, des moyens d'éclairage 3 des caractères formés sur les plaquettes 2, des moyens d'observation 4 des caractères selon un axe optique AO, des moyens d'identification (non représentés) des caractères, des moyens de réflexion 5 lumineuse mobiles entre une première position dans laquelle les moyens de réflexion lumineuse 5 sont placés au dessous des plaquettes, et une deuxième position dans laquelle les moyens de réflexion 5 lumineuse sont insérés entre un premier et un deuxième plans parallèles successifs définissant une première et une deuxième plaquettes successives de la pluralité de plaquettes 2, des moyens de bras 6 portant les moyens de réflexion 5 lumineuse, les moyens de bras 6 comportant un dégagement 7 situé au dessous des moyens de réflexion 5 lumineuse, le dégagement 7 étant positionné entre les premier et deuxième plans P₀ parallèles successifs lorsque les moyens de réflexion lumineuse adoptent la deuxième position, de manière à permettre le passage de l'axe optique AO selon une direction rectiligne entre les moyens d'observation 4 des caractères et les caractères observés.

L'appareil représenté sur la figure 1 comprend en outre une platine 8 à laquelle sont liés les moyens d'observation 4, les moyens d'éclairage 3 et les moyens de bras 6 portant les moyens de réflexion lumineuse 7. La platine 8 dispose d'un degré de liberté en translation, permettant un déplacement parallèlement à l'alignement des plaquettes 2 et sous les plaquettes 2, selon toute technique connue, par exemple le long de moyens de guidage constitués de deux barres 13 de guidage, selon la direction 12 représentée sur la figure 1, de manière à permettre un positionnement des moyens de réflexion lumineuse entre deux plaquettes successives et à l'aplomb de celles-ci, ou la mise en position d'identification des caractères dans le cas de la première plaquette de silicium de l'alignement, qui n'est précédée d'aucune plaquette. Le déplacement de la platine 8 le long des barres de guidage 13 peut être assuré par exemple par une courroie fixée à la platine et entraînée par un moteur (non représenté). L'appareil comprend un châssis 10 selon toute technique connue, permettant une liaison complète et rigide des barres de guidages 13, un positionnement de référence fixe et un maintien des moyens de support 1 des plaquettes.

les moyens de support 1 sont réalisés de toute manière connue, et déterminent un écartement, généralement standard, des plaquettes, fonction du diamètre de celles-ci. Cet écartement peut par exemple donner lieu à un espace libre disponible entre deux plaquettes successives de 5,5 mm environ, dans le cas de plaquettes de diamètre 200 mm. L'appareil selon l'invention comprendra tout moyen connu permettant un alignement des caractères à identifier en partie basse des moyens de support, sensiblement suivant une génératrice de l'enveloppe cylindrique contenant les plaquettes alignées. Les caractères à identifier doivent en effet être alignés selon la direction de déplacement en translation de la platine 8.

Les moyens de bras 6 sont liés à la platine 8 par une liaison rigide à un degré de liberté en translation (non représentée), selon tout moyen connu, par exemple une liaison pignon-crémaillère, et peuvent se déplacer parallèlement aux plans des plaquettes suivant la direction indiquée par la flèche 11 sur la figure 1. Le bras 6 sera de préférence réalisé dans un matériau rigide afin d'assurer un positionnement précis des moyens de réflexion lumineuse, par exemple en matière plastique rigide. Les moyens de réflexion lumineuse 5 sont constitués par toute surface apte à réfléchir la lumière, par exemple un miroir plan 5 fixé de manière complète et rigide sur le bras 6, par exemple par collage. La partie du bras 6 qui doit être insérée entre deux plaquettes successives possédera une épaisseur inférieure à la distance séparant les deux plaquettes successives, par exemple une épaisseur de l'ordre de 3 mm. Sur la figure 1, le bras 6 est représenté dans la première position dans laquelle les moyens de réflexion lumineuse sont placés au dessous des plaquettes.

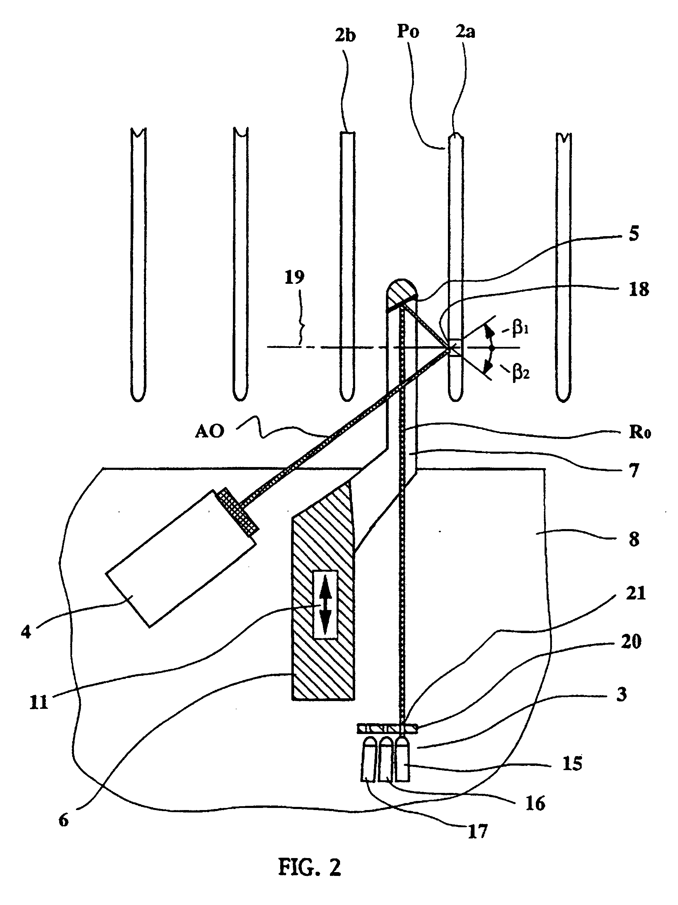

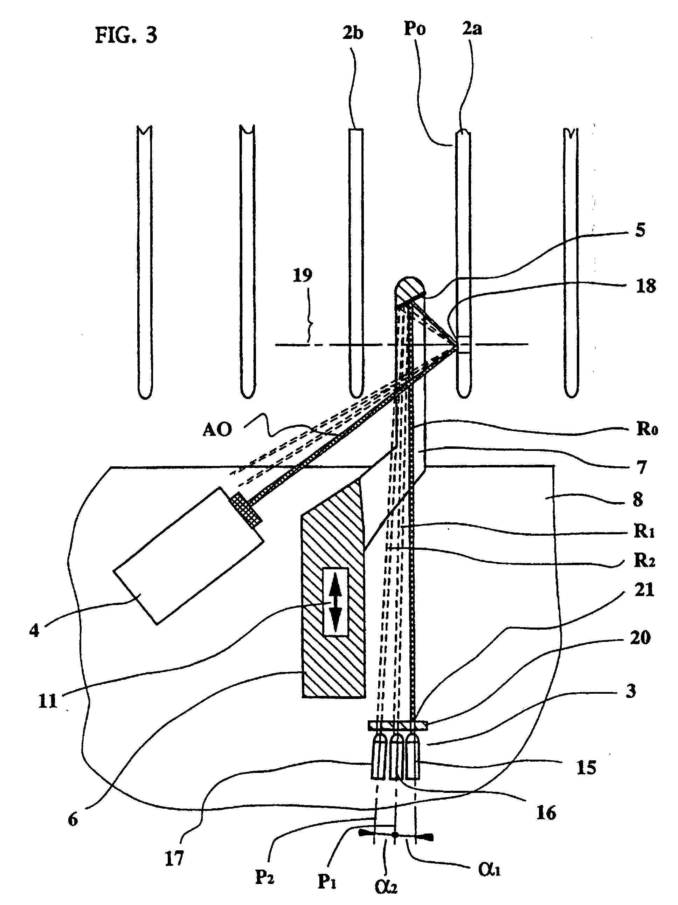

Les moyens d'éclairage 3 sont avantageusement composés de plusieurs diodes électroluminescentes. Comme représenté sur les figures, les moyens d'éclairage comprennent au moins une rangée de diodes, et avantageusement trois rangées 15, 16, et 17 de diodes. Les diodes sont liées de manière complète et rigide à la platine 8 et leur position sera détaillée plus loin à l'aide des figures 2 et 3. Lorsque le bras 6 adopte la deuxième position, le rayonnement lumineux des diodes doit être réfléchi par le miroir 5 sur les caractères à identifier.

La première rangée de diodes 15 sert avantageusement au réglage de l'axe optique AO et de la position du miroir 5, de la manière suivante : la première rangée 15 émet avantageusement un rayonnement lumineux R₀ incident parallèle aux plans parallèles P₀ suivant lesquels sont disposées les plaquettes. L'axe optique AO, et le miroir 5 inséré entre la première 2a et la deuxième 2b plaquettes successives, sont disposés de manière que le rayonnement lumineux R₀ soit réfléchi par le miroir 5 sur les caractères à identifier et réfléchi par la partie de la première plaquette 2a parallèle aux dits plans parallèles P₀, selon la direction de l'axe optique AO. Ce cas est représenté sur la figure 2.

Les deuxième 16 et troisième 17 rangées de diodes servent à l'éclairage des caractères d'une plaquette qui doivent être identifiés. Les deuxième 16 et troisième 17 rangées de diodes émettent un rayonnement lumineux R₁ et R₂ incident réfléchi par le miroir 5 de manière qu'un rayonnement lumineux réfléchi par une partie de la première plaquette 2a parallèle aux plans parallèles P₀, et dont les caractères sont éclairés, soit dirigé selon une direction différente de la direction de l'axe optique AO. Ceci afin d'éviter que les moyens d'observation 4 ne soient éblouis par le rayonnement lumineux directement réfléchi par la partie de la première plaquette 2a parallèle aux plans parallèles P₀, selon l'axe optique AO. Ce procédé permet d'améliorer le contraste de l'image des caractères éclairés et qui doivent être identifiés, reçue par les moyens d'observation 4. Ce cas est représenté sur la figure 3. Un tel procédé permet d'identifier des caractères qui sont formés par gravure ou en relief sur la surface des plaquettes de silicium, et qui sont faiblement gravés ou faiblement en relief, par exemple dans le cas de la gravure, gravés selon une profondeur de 3 µm.

Les moyens d'observation des caractères selon un axe optique AO, sont constitués par une caméra électronique 4 fixée de manière complète et rigide, démontable et avantageusement réglable à la platine 8. Le réglage permettra à l'axe optique AO de la caméra 8 de former un angle avec une perpendiculaire aux plans parallèles P₀, compris entre 20° et 65°, en fonction de la position et de la formation des caractères à identifier sur les plaquettes par rapport au bord inférieur de celles-ci, l'axe optique AO étant avantageusement situé dans un plan vertical perpendiculaire aux plans parallèles P₀, c'est à dire dans le plan de la feuille sur la figure 2 ou 3.

Les moyens d'identification des caractères comprennent un logiciel de traitement d'image et avantageusement un logiciel de reconnaissance des caractères à réseaux de neurones, selon tout moyen connu, interprétant les données fournies par la caméra électronique 4 de manière à identifier les caractères observés.

La figure 2 représente de manière agrandie les moyens de réflexion lumineuse 5, le bras 6, les moyens d'observation 4 et les moyens d'éclairage 3. La platine 8 et les plaquettes de silicium ont été représentées partiellement afin de faciliter la compréhension de la figure par un agrandissement sensible. Le bras 6 est inséré entre deux plaquettes successives 2a et 2b, c'est à dire placé en position d'identification des caractères de la plaquette 2a, dans la deuxième position.

Le bras 6 peut adopter toute forme appropriée de manière à assurer la fonction permettant un positionnement du miroir 5 entre deux plaquettes successives, tout en permettant le passage de l'axe optique AO tel que défini plus haut, et dans le cas de l'exemple représenté le passage des rayonnements lumineux incidents. A cet effet, le bras 6 peut avantageusement adopter une forme pleine avec une fenêtre 7 centrale destinée au passage de l'axe optique AO et des rayonnements lumineux. Le miroir 5 monté en bout de bras comme représenté sur la figure 2, ou la partie de bras 6 le portant, sera de préférence monté en chape plutôt qu'en porte-à-faux, le miroir devant être relativement peu sensible aux vibrations. Comme représenté sur la figure 2, la forme du bras 6 doit permettre le placement des trois rangées de diodes de manière que la première rangée 15 de diodes émette avantageusement un rayonnement lumineux incident dans un plan parallèle aux plans P₀. La forme du bras 6 doit permettre aux deuxième 16 et troisième 17 rangées de diodes placées selon l'exemple entre la première rangée 15 de diodes et le bras 6, comme représenté sur les figures, d'émettre des rayonnements R₁ et R₂ sur le miroir 5. On notera que le miroir 5 est situé au dessus des caractères à identifier lorsque le bras est en position d'identification des caractères, soit en deuxième position.

Le rayonnement incident R₀ réfléchi par le miroir 5 sur les caractères 18 à identifier, et l'axe optique AO sont symétriques par rapport à une perpendiculaire 19 aux plans P₀, en projection dans le plan de la figure 2. La position du miroir 5 et de l'axe optique AO seront appropriées de manière que, quel que soit l'angle formé par le rayonnement incident R₀ avec les plans P₀, les angles β₁ et β₂ formés respectivement par le rayonnement incident R₀ réfléchi par le miroir 5 sur les caractères 18 à identifier, et par l'axe optique AO, par rapport à la perpendiculaire 19, soient égaux, comme représenté sur la figure 2.

Chaque rangée de diodes 15, 16, 17 peut avantageusement comprendre une pluralité de diodes avantageusement alignées, par exemple six (non représentées), placées de manière symétrique par rapport au plan de la feuille lequel correspond au plan vertical de symétrie des plaquettes 2 de silicium. Les caractères à identifier sont couramment placés en partie inférieure de la plaquette comme représenté sur la figure 2 et décrit plus haut, et généralement placés sur une ligne droite. De ce fait, le miroir 5 sera plan comme expliqué plus haut, et les diodes d'une rangée seront alignées de manière que les axes médian des rayonnements lumineux émis respectivement par chacune des diodes, soient parallèles.

Comme représenté sur la figure 2, l'appareil selon l'invention peut comprendre un moyen 20 destiné à concentrer et uniformiser les faisceaux lumineux émis par les diodes sur la zone de la plaquette portant les caractères 18 à identifier, par l'intermédiaire du miroir 5, de façon à éviter les réflexions parasitaires et à réduire la taille des diodes électroluminescentes. Ce moyen 20 peut être constitué par tout dispositif de concentration lumineuse, et notamment par une plaque rigide 20 dans laquelle sont réalisées trois rainures 21 distinctes parallèles aux trois rangées 15, 16, 17 de diodes respectivement, comme représenté sur la figure 2. La plaque rigide 20 est fixée de manière rigide et complète aux diodes ou à la platine 8.

La figure 3 est identique à la figure 2, sur laquelle les rayonnements lumineux R₁ et R₂ émis respectivement par les deuxième 16 et troisième 17 rangées de diodes, ont été représentés afin de mieux comprendre le fonctionnement du procédé selon l'invention. Le rayonnement lumineux incident R₁ émis par la deuxième rangée 16 de diodes comprend au moins un faisceau dont un axe médian est inclus dans un premier plan P₁ formant un angle α₁ supérieur à 0° et inférieur à 3°, et de préférence égal à 2°, avec les plans parallèles P₀ lorsque le rayonnement R₀ est parallèle au plan P₀. Le rayonnement lumineux incident R₂ émis par la troisième rangée 17 de diodes comprend au moins un faisceau dont un axe médian est inclus dans un deuxième plan P₂ formant un angle α₂ supérieur à 0° et inférieur à 3°, et de préférence égal à 2°, avec le premier plan P₁. Le positionnement des rayonnements R₁ et R₂ incidents par rapport au rayonnement R₀ incident permet d'assurer que les rayonnements R₁ et R₂ ne seront pas réfléchis selon la direction de l'axe optique AO par les parties de la surface extérieure de la plaquette, parallèles aux plans parallèles P₀.

Comme représenté sur les figures 2 et 3, l'axe optique AO de la caméra 4 est rectiligne entre la caméra 4 et les caractères 18 à identifier, permettant d'obtenir un système d'observation direct, simple et fiable.

L'appareil selon l'invention sera muni de tout automatisme de fonctionnement (non représenté) assurant notamment un asservissement de la position du miroir par l'intermédiaire du bras 6 et de la platine 8 en fonction de la position de référence des plaquettes de silicium par l'intermédiaire des moyens de support 1, du châssis, et le cas échéant d'un programme d'identification des plaquettes placées sur les moyens de support 1.

Additionnellement à la liaison rigide à un degré de liberté en translation (non représentée), le bras 6 sera avantageusement lié à la platine 8 par l'intermédiaire d'une liaison réglable (non représentée), pour permettre un réglage initial du positionnement du miroir 5 en deuxième position, conjointement avec le réglage détaillé plus haut de l'axe optique AO, de manière que le rayonnement lumineux R₀ incident soit réfléchi par le miroir 5 et par la partie d'une plaquette parallèle aux plans parallèles P₀, selon la direction de l'axe optique AO. Ce réglage permet d'assurer que les rayonnements R₁ et R₂ réfléchis par le miroir 5 puis par une partie de plaquette parallèle aux plans parallèles P₀, soient dirigés selon des directions différentes de la direction de l'axe optique AO d'observation. Il est à noter que rayonnement lumineux R₀ émis par la première rangée 15 de diodes ne sera ensuite plus utilisé durant l'identification des plaquettes de silicium contenues dans les moyens de support 1.

## Revendications

1. Procédé d'identification de caractères formés sur une pluralité 2 de plaquettes de silicium, lesdites plaquettes étant disposées suivant des plans parallèles (P₀) et alignées sur des moyens de support (1), consistant au moins à éclairer les caractères d'une plaquette, observer lesdits caractères éclairés, identifier lesdits caractères observés, ***caractérisé en ce qu'***il consiste à :
- insérer des moyens de réflexion lumineuse (5) entre une première (2a) et une deuxième (2b) plaquettes successives de ladite pluralité de plaquettes, à partir du dessous de ladite pluralité de plaquettes,
- éclairer les caractères formés sur ladite première plaquette par l'intermédiaire d'un premier rayonnement lumineux (R₁) incident réfléchi par lesdits moyens de réflexion lumineuse insérés entre ladite première et ladite deuxième plaquettes successives, de manière que ledit premier rayonnement lumineux incident, réfléchi par une partie de ladite première plaquette parallèle aux dits plans parallèles (P₀), soit dirigé selon une direction différente de la direction d'un axe optique (AO) d'observation,
- observer lesdits caractères éclairés de ladite première plaquette selon ledit axe optique, ledit axe optique étant rectiligne et disposé au moins en partie sous ladite pluralité de plaquettes.

2. Procédé selon la revendication 1, ***caractérisé en ce qu'***il consiste à insérer lesdits moyens de réflexion lumineuse (5) au dessus desdits caractères à identifier.

3. Procédé selon la revendication 1 ou 2, ***caractérisé en ce qu*'**il consiste à disposer ledit axe optique (AO), et lesdits moyens de réflexion lumineuse (5) insérés entre ladite première (2a) et ladite deuxième (2b) plaquettes successives, de manière qu'un deuxième rayonnement lumineux (R₀) incident soit réfléchi par lesdits moyens de réflexion lumineuse et par ladite partie de ladite première plaquette parallèle aux dits plans parallèles (P₀), selon la direction dudit axe optique (AO).

4. Procédé selon la revendication 3, ***caractérisé en ce que*** ledit deuxième rayonnement lumineux incident comprend au moins un premier faisceau (R₀) dont un axe médian est parallèle aux dits plans parallèles (P₀) suivant lesquels sont disposés lesdites plaquettes.

5. Procédé selon la revendication 4, ***caractérisé en ce que*** ledit premier rayonnement lumineux incident comprend au moins un deuxième faisceau (R₁) dont un axe médian est inclus dans un premier plan (P ₁) formant un angle (α₁) supérieur à 0° et inférieur à 3°, et de préférence égal à 2°, avec lesdits plans parallèles (P₀).

6. Procédé selon la revendication 5, ***caractérisé en ce que*** ledit premier rayonnement lumineux incident comprend au moins un troisième faisceau (R₂) dont un axe médian est inclus dans un deuxième plan (P₂) formant un angle (α₂) supérieur à 0° et inférieur à 3°, et de préférence égal à 2°, avec ledit premier plan (P₁).

7. Appareil permettant de mettre en oeuvre un procédé d'identification de caractères formés sur une pluralité de plaquettes de silicium, comprenant des moyens de support (1) desdites plaquettes permettant une disposition desdites plaquettes suivant des plans parallèles (P₀) et un alignement desdites plaquettes, des moyens d'éclairage (3) desdits caractères, des moyens d'observation (4) desdits caractères selon un axe optique (AO), des moyens d'identification des caractères observés, ***caractérisé en ce qu'***il comprend des moyens de réflexion lumineuse (5) mobiles entre une première position dans laquelle lesdits moyens de réflexion lumineuse sont placés au dessous de ladite pluralité de plaquettes, et une deuxième position dans laquelle lesdits moyens de réflexion lumineuse sont insérés entre un premier et un deuxième plans parallèles successifs suivant lesquels sont disposées une première (2a) et une deuxième (2b) plaquettes successives de ladite pluralité (2) de plaquettes, des moyens de bras (6) portant lesdits moyens de réflexion lumineuse, lesdits moyens de bras comportant un dégagement (7) situé au dessous desdits moyens de réflexion lumineuse, ledit dégagement étant positionné en partie entre lesdits premier et deuxième plans parallèles successifs lorsque lesdits moyens de réflexion lumineuse adoptent ladite deuxième position, de manière à permettre le passage dudit axe optique selon une direction rectiligne entre lesdits moyens d'observation desdits caractères et lesdits caractères observés, et **en ce que** lesdits moyens d'éclairage desdits caractères comprennent un premier rayonnement lumineux incident réfléchi par lesdits moyens de réflexion lumineuse de manière qu'un rayonnement lumineux réfléchi par une partie de plaquette parallèle aux dits plans parallèles (P₀), et dont les caractères sont éclairés, soit dirigé selon une direction différente de ladite direction dudit axe optique.

8. Appareil selon la revendication 7, ***caractérisé en ce que*** ladite deuxième position desdits moyens de réflexion lumineuse (5) est située au dessus desdits caractères à identifier

9. Appareil selon la revendication 7 ou 8, ***caractérisé en ce que*** lesdits moyens d'éclairage comprennent un deuxième rayonnement lumineux (R₀) incident réfléchi par lesdits moyens de réflexion lumineuse (5) insérés entre lesdits premier et deuxième plans parallèles successifs définissant lesdites première (2a) et deuxième (2b) plaquettes successives, de manière qu'un rayonnement lumineux réfléchi par une partie de plaquette parallèle aux dits plans parallèles (P₀), soit dirigé selon ladite direction dudit axe optique (AO).

10. Appareil selon la revendication 9, ***caractérisé en ce que*** ledit deuxième rayonnement lumineux incident comprend au moins un premier faisceau (R₀) dont un axe médian est parallèle aux dits plans (P₀) suivant lesquels sont disposés lesdites plaquettes de silicium.

11. Appareil selon la revendication 10, ***caractérisé en ce que*** ledit premier rayonnement lumineux incident comprend au moins un deuxième faisceau (R₁) dont un axe médian est inclus dans un premier plan (P₁) formant un angle (α₁) supérieur à 0° et inférieur 3°, et de préférence égal à 2°, avec lesdits plans (P₀).

12. Appareil selon la revendication 11, ***caractérisé en ce que*** ledit premier rayonnement lumineux incident comprend au moins un troisième faisceau (R₂) dont un axe médian est inclus dans un deuxième plan (P₂) formant un angle (α₂) supérieur à 0° et inférieur 3°, et de préférence égal à 2°, avec ledit premier plan (P₁).

## Claims

1. Method of identifying characters, which are formed on a plurality of silicon wafers, the said wafers being disposed along parallel planes (P₀) and aligned with supporting means (1), said method comprising at least illuminating the characters of one wafer, observing the said illuminated characters and identifying the said observed characters, **characterised in that** it comprises:
- inserting luminous reflection means (5) between a first (2a) and a second (2b) successive wafer of the said plurality of wafers, starting from underneath the said plurality of wafers;
- illuminating the characters which are formed on the first wafer through the intermediary of a first incident luminous ray (R₁) which is reflected by the said luminous reflection means, which are inserted between the said first and the said second successive wafer, in such a way that the said first incident luminous ray, which is reflected by part of the said first wafer which is parallel to the said parallel planes (P₀), shall be directed in a direction which is different from the direction of an optical axis of observation (AO); and
- observing the said illuminated characters of the said first wafer along the said optical axis, the said optical axis being rectilinear and disposed, at least in part, under the said plurality of wafers.

2. Method according to claim 1, **characterised in that** it comprises inserting the said luminous reflection means (5) above the said characters which are to be identified.

3. Method according to claim 1 or 2, **characterised in that** it comprises disposing the said optical axis (AO) and the said luminous reflection means (5), which are inserted between the said first (2a) and the said second (2b) successive wafers, in such a way that a second incident luminous ray (R₀) shall be reflected by the said luminous reflection means and by the said part of the said first wafer, which is parallel to the said parallel planes (P₀), in the direction of the said optical axis (AO).

4. Method according to claim 3, **characterised in that** the said second incident luminous ray comprises at least one first beam (R₀), of which one median axis is parallel to the said parallel planes (P₀), along which the said wafers are disposed.

5. Method according to claim 4, **characterised in that** the said first incident luminous ray comprises at least one second beam (R₁), of which one median axis is included in a first plane (P₁) which forms an angle (α₁), which is greater than 0° and less than 3° and preferably equal to 2°, with the said parallel planes (P₀).

6. Method according to claim 5, **characterised in that** the said first incident luminous ray comprises at least one third beam (R₂) of which one median axis is included in a second plane (P₂) which forms an angle (α₂), which is greater than 0° and less than 3° and preferably equal to 2°, with the said first plane (P₁).

7. Apparatus which permits a method of identifying characters, which are formed on a plurality of silicon wafers, to be accomplished, said apparatus comprising supporting means (1) for supporting the said wafers, which means permits the said wafers to be disposed along parallel planes (P₀) and the said wafers to be aligned, means (3) for illuminating the said characters, means (4) for observing the said characters along an optical axis (AO) and means for identifying the observed characters, **characterised in that** it comprises luminous reflection means (5) which are displaceable between a first position, in which the said luminous reflection means are placed below the said plurality of wafers, and a second position, in which the said luminous reflection means are inserted between a first and a second successive parallel plane, along which a first (2a) and a second (2b) successive wafer of the said plurality (2) of wafers are disposed, means comprising arms (6) which carry the said luminous reflection means, the said means comprising arms comprising a clear region (7) which is situated below the said luminous reflection means, the said clear region being positioned in part between the said first and second parallel successive planes, while the said luminous reflection means adopt the said second position in such a way as to permit the said optical axis to pass in a rectilinear direction between the said means for observing the said characters and the said observed characters, and **in that** the said means for illuminating the said characters comprise a first incident luminous ray which is reflected by the said luminous reflection means in such a way that a luminous ray, which is reflected by part of the wafer which is parallel to the said parallel planes (P₀), and the characters of which are illuminated, shall be directed in a direction which is different from the said direction of the said optical axis.

8. Apparatus according to claim 7, **characterised in that** the said second position of the said luminous reflection means (5) is situated above the said characters which are to be identified.

9. Apparatus according to claim 7 or 8, **characterised in that** the said illuminating means comprise a second incident luminous ray (R₀) which is reflected by the said luminous reflection means (50 which are inserted between the said first and second successive parallel planes which define the said first (2a) and second (2b) successive wafers in such a way that a luminous ray, which is reflected by a part of the wafer which is parallel to the said parallel planes (P₀), shall be directed in the said direction of the said optical axis (AO).

10. Apparatus according to claim 9, **characterised in that** the said second incident luminous ray comprises at least one first beam (R₀), of which one median axis is parallel to the said planes (P₀) along which the said silicon wafers are disposed.

11. Apparatus according to claim 10, **characterised in that** the said first incident luminous ray comprises at least one second beam (R₁), of which one median axis is included in a first plane (P₁) which forms an angle (α₁), which is greater than 0° and less than 3° and preferably equal to 2°, with the said planes (P₀).

12. Apparatus according to claim 11, **characterised in that** the said first incident luminous ray comprises at least one third beam (R₂), of which one median axis is included in a second plane (P₂) which forms an angle (α₂), which is greater than 0° and less than 3° and preferably equal to 2°, with the said first plane (P₁).

## Patentansprüche

1. Verfahren zum Identifizieren von Zeichen, die auf einer Vielzahl (2) von Siliziumplättchen gebildet sind, wobei die Plättchen entlang paralleler Ebenen (P₀) angeordnet und auf Trägermitteln (1) ausgerichtet sind, wobei das Verfahren zumindest darin besteht,
die Zeichen eines Plättchens zu beleuchten,
die beleuchteten Zeichen zu beobachten,
die beobachteten Zeichen zu identifizieren,
**dadurch gekennzeichnet,**
**dass** es darin besteht:
- Lichtreflexionsmittel (5) zwischen einem ersten (2a) und einem zweiten (2b) von aufeinanderfolgenden Plättchen der Vielzahl von Plättchen einzuführen, ausgehend von der Unterseite der Vielzahl von Plättchen,
- die auf dem ersten Plättchen gebildeten Zeichen mittels einer ersten einfallenden Lichtstrahlung (R₁) zu beleuchten, die durch die Lichtreflexionsmittel reflektiert wird, die zwischen dem ersten und dem zweiten der aufeinanderfolgenden Plättchen eingeführt sind, so dass die erste einfallende Lichtstrahlung, die durch einen Teil des ersten Plättchens reflektiert wird, das parallel zu den parallelen Ebenen (P₀) ist, in eine andere Richtung als die Richtung einer optischen Beobachtungsachse (AO) geleitet wird,
- die beleuchteten Zeichen des ersten Plättchens in der optischen Achse zu beobachten, wobei die optische Achse geradlinig und mindestens teilweise unter der Vielzahl der Plättchen angeordnet ist.

2. Verfahren nach Anspruch 1,
**dadurch gekennzeichnet,**
**dass** es darin besteht, die Lichtreflexionsmittel (5) oberhalb der zu identifizierenden Zeichen einzuführen.

3. Verfahren nach Anspruch 1 oder 2,
**dadurch gekennzeichnet,**
**dass** es darin besteht,
die optische Achse (AO) und die Lichtreflexionsmittel (5), die zwischen dem ersten (2a) und dem zweiten (2b) der aufeinanderfolgenden Plättchen eingeführt sind, derart anzuordnen, dass eine zweite einfallende Lichtstrahlung (R₀) durch die Lichtreflexionsmittel und durch den Teil des ersten Plättchens, das parallel zu den parallelen Ebenen (P₀) ist, in Richtung der optischen Achse (AO) reflektiert wird.

4. Verfahren nach Anspruch 3,
**dadurch gekennzeichnet,**
**dass** die zweite einfallende Lichtstrahlung mindestens einen ersten Strahl (R₀) aufweist, von dem eine Mittelachse parallel zu den parallelen Ebenen (P₀) verläuft, entlang derer die Plättchen angeordnet sind.

5. Verfahren nach Anspruch 4,
**dadurch gekennzeichnet,**
**dass** die erste einfallende Lichtstrahlung mindestens einen zweiten Strahl (R₁) aufweist, von dem eine Mittelachse in einer ersten Ebene (P₁) liegt, die mit den parallelen Ebenen (P₀) einen Winkel (α₁) bildet, der größer als 0° und kleiner als 3° und vorzugsweise gleich 2° ist.

6. Verfahren nach Anspruch 5,
**dadurch gekennzeichnet,**
**dass** die erste einfallende Lichtstrahlung mindestens einen dritten Strahl (R₂) aufweist, von dem eine Mittelachse in einer zweiten Ebene (P₂) liegt, die mit der ersten Ebene (P₁) einen Winkel (α₂) bildet, der größer als 0° und kleiner als 3° und vorzugsweise gleich 2° ist.

7. Vorrichtung, die es gestattet, ein Verfahren zum Identifizieren von.Zeichen auszuführen, die auf einer Vielzahl von Siliziumplättchen gebildet sind, wobei die Vorrichtung aufweist:
Mittel zum Tragen der Plättchen (1), wobei die Mittel (1) eine Anordnung der Plättchen entlang paralleler Ebenen (P₀) und eine Ausrichtung der Plättchen gestatten,
Mittel zur Beleuchtung der Zeichen (3),
Mittel zum Beobachten der Zeichen (4) in einer optischen Achse (AO),
Mittel zum Identifizieren der beobachteten Zeichen,
**dadurch gekennzeichnet,**
**dass** sie aufweist: Lichtreflexionsmittel (5), die zwischen einer ersten Position, in der die Lichtreflexionsmittel unterhalb der Vielzahl von Plättchen angeordnet sind, und einer zweiten Position beweglich sind, in der die Lichtreflexionsmittel zwischen einer ersten und einer zweiten parallelen aufeinanderfolgenden Ebene eingeführt sind, entlang derer ein erstes (2a) und ein zweites (2b) von aufeinanderfolgenden Plättchen der Vielzahl (2) von Plättchen angeordnet sind, Armmittel (6), die die Lichtreflexionsmittel tragen, wobei die Armmittel eine Ausnehmung (7) aufweisen, die unterhalb der Lichtreflexionsmittel gelegen ist, wobei die Ausnehmung teilweise zwischen der ersten und zweiten parallelen aufeinanderfolgenden Ebene positioniert ist, wenn die Lichtreflexionsmittel die zweite Position einnehmen, so dass der Durchgang der optischen Achse in einer geradlinigen Richtung zwischen den Mitteln zur Beobachtung der Zeichen und den beobachteten Zeichen gestattet ist, und dass die Mittel zur Beleuchtung der Zeichen eine erste einfallende Lichtstrahlung aufweisen, die durch die Lichtreflexionsmittel derart reflektiert wird, dass eine Lichtstrahlung, die durch einen Teil eines Plättchens reflektiert wird, das parallel zu den parallelen Ebenen (P₀) ist und dessen Zeichen beleuchtet sind, in eine andere Richtung geleitet wird als die Richtung der optischen Achse.

8. Vorrichtung nach Anspruch 7,
**dadurch gekennzeichnet,**
**dass** die zweite Position der Lichtreflexionsmittel (5) oberhalb der zu identifizierenden Zeichen liegt.

9. Vorrichtung nach Anspruch 7 oder 8,
**dadurch gekennzeichnet,**
**dass** die Beleuchtungsmittel eine zweite einfallende Lichtstrahlung (R₀) aufweisen, die durch die Lichtreflexionsmittel (5) reflektiert wird, die zwischen der ersten und zweiten parallelen aufeinanderfolgenden Ebene eingeführt sind, die das erste (2a) und das zweite (2b) der aufeinanderfolgenden Plättchen festlegen, so dass eine Lichtstrahlung, die durch einen Teil eines Plättchens reflektiert wird, das parallel zu den parallelen Ebenen (P₀) ist, in die Richtung der optischen Achse (AO) geleitet wird.

10. Vorrichtung nach Anspruch 9,
**dadurch gekennzeichnet,**
**dass** die zweite einfallende Lichtstrahlung mindestens einen ersten Strahl (R₀) aufweist, von dem eine Mittelachse parallel zu den Ebenen (P₀) verläuft, entlang derer die Siliziumplättchen angeordnet sind.

11. Vorrichtung nach Anspruch 10,
**dadurch gekennzeichnet,**
**dass** die erste einfallende Lichtstrahlung mindestens einen zweiten Strahl (R₁) aufweist, von dem eine Mittelachse in einer ersten Ebene (P₁) liegt, die mit
den Ebenen (P₀) einen Winkel (α₁) bildet, der größer als 0° und kleiner als 3° und vorzugsweise gleich 2° ist.

12. Vorrichtung nach Anspruch 11,
**dadurch gekennzeichnet,**
**dass** die erste einfallende Lichtstrahlung mindestens einen dritten Strahl (R₂) aufweist, von dem eine Mittelachse in einer zweiten Ebene (P₂) liegt, die mit der ersten Ebene (P₁) einen Winkel (α₂) bildet, der größer 0° und kleiner 3° und vorzugsweise gleich 2° ist.
